# EUROPEAN PATENT SPECIFICATION

(11) **EP 1 425 918 B1**
(45) Date of publication and mention of the grant of the patent: **15.11.2006**
(21) Application number: 02773329.4
(22) Date of filing: 12.09.2002
(51) Int. Cl.: H04N 7/173, G06F 13/38

(54) **A METHOD AND APPARATUS FOR DISCONNECTED CHAT ROOM LURKING IN AN INTERACTIVE TELEVISION ENVIRONMENT**
VERFAHREN UND GERÄT FÜR INTERAKTIVES FERNSEHEN MIT UNVERBUNDENER ÜBERWACHUNG EINER DISKUSSIONSFORUM
PROCEDE ET APPAREIL PERMETTANT DE BADAUDER DANS UN BAVARDOIR SANS SE CONNECTER DANS UN ENVIRONNEMENT INTERACTIF DE TELEVISION

(30) Priority: 12.09.2001 US 322067 P
(43) Date of publication of application: 09.06.2004
(73) Proprietor: OpenTV, Inc., San Francisco CA 94111 (US)
(72) Inventor: TAPISSIER, Frederic, 75015 Paris (FR); DELPUCH, Alain, 78690 Les Essarts Le Roi (FR)
(74) Representative: Freeman, Jacqueline Carol
(86) International application number: PCT/US2002/028853
(87) International publication number: WO 2003/030547

(56) References cited:
- EP-A- 1 091 582
- EP-A- 1 111 926
- WO-A-00/13416
- US-A- 6 076 100
- US-A- 6 081 830
- US-B1- 6 240 555

## Description

### Background of the Invention

### Field of the Invention

The present invention relates to the field of communications in the interactive television environment and specifically relates to a method and apparatus for providing a chat room for unregistered interactive television viewers.

### Summary of the Related Art

Interactive television systems can be used to provide a wide variety of services to viewers. Interactive television systems are capable of delivering typical video program streams, interactive television applications, text and graphic images, web pages and other types of information. Interactive television systems are also capable of registering viewer actions or responses and can be used for such purposes as marketing, entertainment and education. Users or viewers may interact with the systems by ordering advertised products or services, competing against contestants in a game show, requesting specialized information regarding particular programs, or navigating through pages of information.

Typically, a broadcast service provider or network operator generates an interactive television signal for transmission to a viewer's television. The interactive television signal may include an interactive portion comprising of application code or control information, as well as an audio/video portion comprising a television program or other informational displays. The broadcast service provider combines the audio/video (A/V) and interactive portions into a single signal for transmission to a receiver connected to the user's television. The signal is generally compressed prior to transmission and transmitted through typical broadcast channels, such as cable television (CATV) lines or direct satellite transmission systems.

Typically, the interactive functionality of the television is controlled by a set top box (STB) connected to the television. The STB receives a broadcast signal transmitted by the broadcast service provider, separates the interactive portion of the signal from the A/V portion of the signal and decompresses the respective portions of the signal. The STB uses the interactive information, for example, to execute an application while the A/V information is transmitted to the television. The STB may combine the AN information with interactive graphics or audio generated by the interactive application prior to transmitting the information to the television. The interactive graphics and audio may present additional information to the viewer or may prompt the viewer for input. The STB may provide viewer input or other information to the broadcast service provider via a modem connection or cable.

Chat rooms are presently available on the Internet, but require signing on and registering with the chat room to see the chat room content. Once registered with the chat room, a registrant may then lurk in the chat room, that is, see the contents of the chat room without participating in the conversation. In an interactive television environment a user must establish a back channel connection with the interactive television server to register with a chat room. This back channel connection may entail a fee to the user and ties up the user's back channel connection. Moreover, with a large population of interactive television subscribers, requiring everyone to sign on to see the chat room contents is problematic. Users may also be deterred from lurking in a chat room if required to take the extra step of establishing a back channel connection with the chat room. Thus there is a need for a chat room broadcast mode wherein a user can see the contents of a chat room without requiring the user to sign on and register with the chat room via a back channel connection.

### Summary of the Invention

The present invention addresses the needs of the interactive television environment discussed above. The present invention satisfies a long felt need to provide a chat room broadcast for lurking "in" a chat room, without the need for establishing a back channel connection. The present invention provides a mode of chat room broadcasting and communication that can be easily handled by a client device, typically a set top box (STB) processor, a server, its subscriber clients and a plurality of service providers. The present invention broadcasts chat rooms to clients who may either connect through a back channel to participate in a chat room or simply lurk, that is, to watch the chat room content and discussion in the broadcast without participating or registering in the chat room.

The present invention provides a method for broadcasting a chat room in an interactive television environment, said method comprising:
registering one or more television subscribers with a chat room server associated with a
television broadcast station;
receiving chat room message input from said one or more registered subscribers at the chat room server;
broadcasting said message input to one or more registered television subscribers, wherein said unregistered subscribers are not permitted to provide message input to said chat server; and
displaying the message input on a display associated with the unregistered television subscribers.

The present invention also provides a computer readable medium containing computer readable instructions, wherein said instructions are executable to:
register one or more television subscribers with a chat room server associated with a television broadcast station;
receive chat room message input from said one or more registered subscribers at the chat room server;
broadcast said message input to one or more unregistered television subscribers, wherein said unregistered subscribers are not permitted to provide message input to said chat server; and
display the message input on a display associated with the unregistered television subscribers.

The client or user may watch or lurk in the chat room while disconnected, that is, the client is not signed on the server, via a return path, as a registered chat room participant. The possibility lurkers may or may not be revealed to chat room participants. The content of the chat room may also be spoken aloud utilizing a script to language translator or actual spoken responses from the chat room participants. The chat room translator also translates either script or verbal spoken language from one language to another, e.g. French to English. Persons participating in a chat room may select a simulated voice type to enunciate either their written or spoken chat room contributions. Short video and or still images of the participants are downloaded and stored at the server for broadcast during chat room interactions. Chat room identities can be authenticated and censored accordingly as desired, for example, authenticating a child participant and censoring or excluding the child from participating or lurking in chat rooms having objectionable content. The present invention also provides for broadcast and optional participation or lurking in content other than chat rooms, for example, bridge, chess or other interactive gaming or entertainment for both visual and audio content.

In one aspect of the present invention a method for broadcasting a chat room in an interactive television environment, is presented comprising the steps of broadcasting a chat-room to at least one client device associated with a user in an interactive television system and displaying-the broadcast chat room content on a display associated with the user. In another aspect of the invention a method is presented further comprising connecting the user to participate in the chat room via a return path in the interactive television system. In another aspect of the invention a method is presented further comprising connecting the user to participate in the chat room via mobile phone or Short Messaging Service. In another aspect of the invention a method is presented further comprising connecting the user to participate in the chat room via a personal computer and the Internet. In another aspect of the invention a method is presented further comprising selectively removing objectionable content based on a user profile. In another aspect of the invention a method is presented further comprising registering a plurality of users for participation in the chat room and allowing at least one registered user to vote to exclude a second registered user from the chat room. In another aspect of the invention a method is presented further comprising broadcasting chat room content along with television content to at least one client device associated with a user.

In another aspect of the invention a method is presented further comprising collecting viewer profile information from a chat room user and creating meta data for the chat room based on the viewer profile. In another aspect of the invention a method is presented further comprising broadcasting the meta data to at least one client device associated with a user. In another aspect of the invention a method is presented further comprising broadcasting a plurality of chat rooms content to at least one client device associated with a user in an interactive television system and displaying at least one of the chat rooms content in a display associated with the client device. In another aspect of the invention a method is presented wherein the broadcast comprises a single stream of information. In another aspect of the invention a method is presented further comprising creating a community of chat room users from a group of chat room users and sending an notice of activity relating to the chat room to the community of chat room users.

In another aspect of the invention a method is presented further comprising sending a list of available chat rooms to the user and promoting a chat room in the list according to meta data for the chat room and a viewer profile for the user. In another aspect of the invention a method is presented further comprising sending targeted advertisements to client devices a user's participation in a chat room. In another aspect of the invention a method is presented further comprising generating meta data for chat room based on the chat room content. In another aspect of the invention a method is presented further comprising connecting a user to a chat server internal or external to the interactive television system.

In another aspect of the invention a method is presented further comprising storing a nickname for a first chat room participant in a memory associated with a second chat room participant and sending a notice to the second chat room participant when the first chat room participant signs into the chat room. In another aspect of the invention a method is presented further comprising sending a notice to the second chat room participant when the first chat room participant signs into any chat room. In another aspect of the invention a method is presented further comprising selecting a chat room for broadcast from available chat rooms based on a user's viewer profile. In another aspect of the invention a method is presented further comprising promoting chat rooms in the list by highlighting, sorting, color-coding, voice tagging or flashing a chat room entry in the list. In another aspect of the invention a method is presented further comprising registering a plurality of users for participation in a chat room and allowing at least one registered user to vote to exclude another registered user from the chat room.

Other aspects and advantages of the present invention will be obvious from the following description and figures.

### Brief Description of the Drawings

Other objects and advantages of the invention will become apparent upon reading the following detailed description and upon reference to the accompanying drawings in which:
**Figure 1** illustrates a high-level architecture diagram for a preferred embodiment of a service platform in which the present invention resides;
**Figure 2** illustrates a more detailed architecture for a service platform in which the present invention resides;
**Figure 3** illustrates a mid level architecture for a preferred embodiment of the service platform showing databases;
**Figure 4** illustrates a flow chart for the preferred Chat Application
Navigation;
**Figure 5** illustrates a preferred server solution with OTV publisher,
Service Gateway, Set Top Box and associated communication paths;
**Figure 6** is an illustration of interactive TV (iTV) Chat and Instant
Messaging (IM);
**Figure 7** is an illustration of the preferred Service Platform in communication with a preferred IM and Chat broker;
**Figure 8** is an illustration of a preferred extended instant messaging;
**Figure 9** is an illustration of a preferred presence server;
**Figure 10** is an illustration of a preferred IM server;
**Figure 11** is an illustration of preferred IM and Chat gadgets (task/methods);
**Figure 12** is an illustration of regular communication methodology for internet chat room users;
**Figure 13** is an illustration of the preferred communication methodology for iTV chat room users;
**Figure 14** illustrates a preferred message pump connected to the SGW service gateway in a preferred embodiment;
**Figure 15** illustrates a typical architecture for the present invention;
**Figure 16** illustrates a preferred logical architecture for the present invention;
**Figure 17** illustrates a movie channel example of the present invention;
**Figure 18** illustrates a sporting event, enhanced TV-chat example of the present invention; and
**Figure 19** illustrates a lurking screen example of the present invention.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the invention is to cover all modifications, equivalents and alternatives falling within the spirit and scope of the present invention as defined by the appended claims.

### Detailed Description of A Preferred Embodiment

While the following discussion uses the example of a client/STB, the present invention applies to all client devices including digital assistants, cell phones, pocket personal computers or any other types of electronic device capable of receiving an electronic signal. The present invention resides in a service platform (SP). The SP or server enables a network operator, who provides television signals to its subscriber clients, to create and provide business, transport and communication functions that enable communication between service providers and the client or STB viewer via the service gateway.

The interactive television environment must deal with and solve problems that are unique to interactive television. There are several communication modes in interactive television, including one to many (broadcast) communication and many to many communication. Bandwidth and processing limitations and communication complexities are also problematic in the interactive television environment. On one hand the network operator typically provides a broadcast channel with a relatively large data transmission capacity (typically a satellite and dish) to send data and programming to the client. On the other hand, the client return path typically has a relatively low data transmission capacity, usually in the STB scenario, a telephone line is the return path. Even if the return path happens to have a larger bandwidth, STBs/clients typically possess a low speed modem to send data on the return path. These and other issues are addressed by the present invention.

The present invention, resides in head-end operator's service platform (SP) and interacts with a client set top box (STB). In a typical interactive television environment, there are a multitude of clients/subscribers, typically STBs that communicate with a multitude of application servers providing content over a multitude of networks using various communication protocols. The present invention enables a chat room communication mode between client subscribers and a disconnected chat room lurking option for clients.

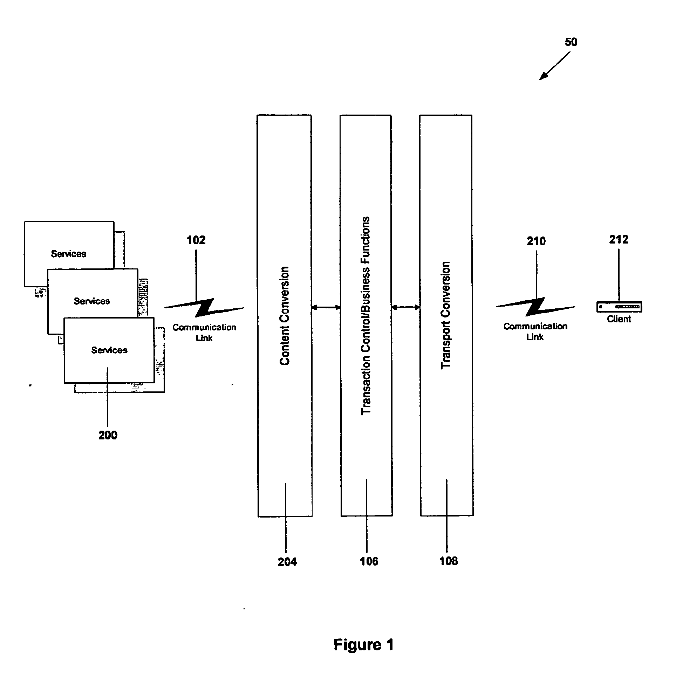

Turning now to **Figure 1,** the Service Platform (SP) in which the present invention resides is presented. The SP **50** comprises a group of applications roughly divided into three categories, Content Conversion **204,** Transaction Control/Business Functions **106** and Transport Conversion **108.** The SP enables services **200** to interact with a client **212.** The services **200** communicate through a communication link **102** to the SP **50.** The SP **50** in turn communicates with a client **212.** The client **212** may be a STB, a digital assistant, a cellular phone, or any other communication device capable of communicating with the SP through communication link **210.** The content conversion **204** and transport conversion **108** services provide the transport and communication function, and the business function services provide the business control functions.

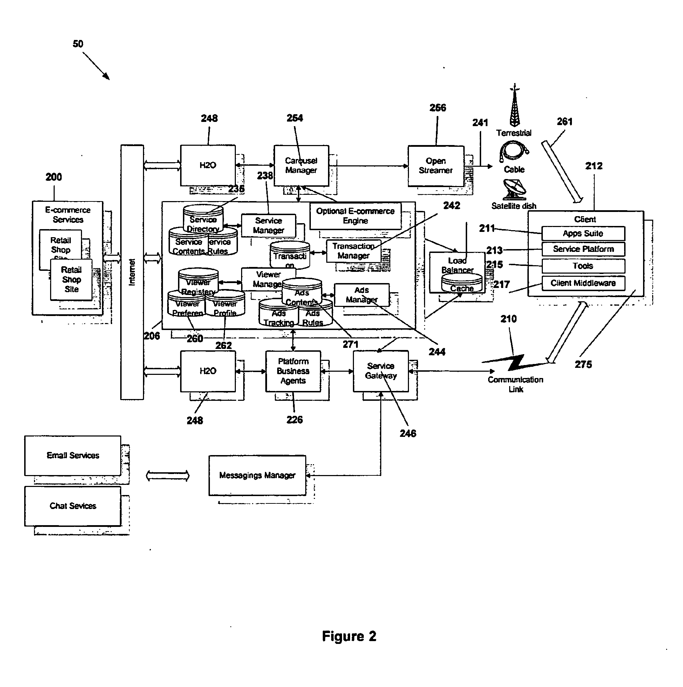

**Figure 2** illustrates an example of a preferred implementation of Service Platform **50.** Services **200** provide shopping, chat, and other services either over the Internet or over another network or communication channel accessible to the network operator. Using the SP, the network operator accesses those services. Business functions **206,** comprising service manager **238,** interact with carousel manager **254** to retrieve content from a service **200.** The carousel comprises a repeating stream of audio/video/interactive data broad cast to clients from the SP **50.** Carousel manager **254,** transaction manager **242** and service manager **238** control the content insertion and deletion from the broadcast carousel. Service content is retrieved and converted into a SP suitable format by H2O **248.** H2O **248** is a possible implementation of content conversion **204.** H2O converts HTML content into SP/client readable content. The converted content is formatted into a data carousel and multiplexed by the Open Streamer **256** for broadcast to the client **212.** Client **212** interacts with the services and if necessary communicates with the SP and the services **200.** PTP communication goes through SGW **246.** SGW **246** performs transport conversion to convert the STB DATP protocol into a standard communication protocol which the Platform Business Agents **226** and H2O **248** understand. Load balancer **236** interacts with business functions **206,** carousel manager **254,** and SGW **246** to determine the optimal load between the broadcast link **241** and the PTP communication link **210.** Business functions **206,** interact with the platform business agents **226** to control access and information exchange between the services **200** and client **212.**

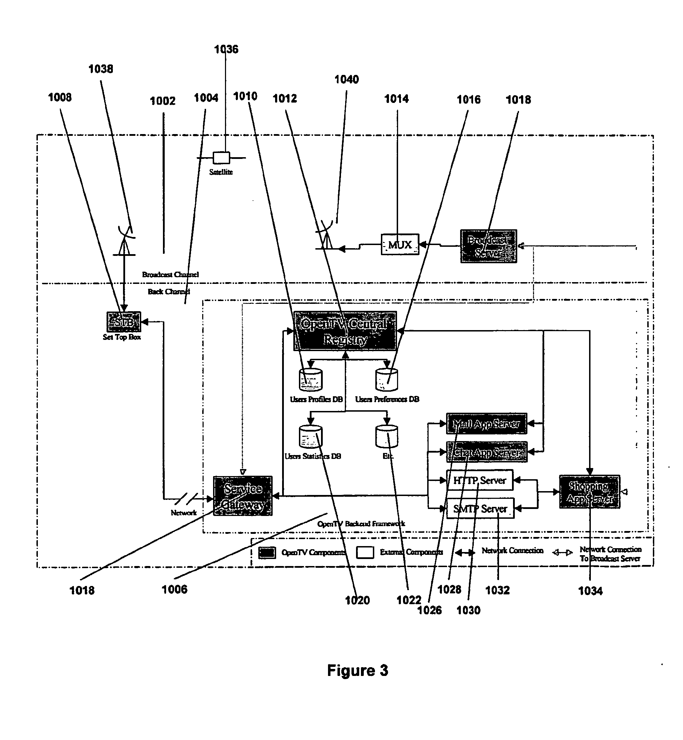

Services **200** negotiate with a network operator to offer services to subscribers via the operator's Service Platform. As shown in **Figure 3,** the network operator uses the Service Manger **238** to register the services and the negotiated business rules **222** (e.g. schedule, bandwidth requirements, service access to viewer information) associated with the service. The Service Manager **238** stores Service data **216** (e.g. URL address, content). Based on the business rules **222** and Service Data **216,** Service Manager **238** communicates with the Broadcast Communication **234** function to retrieve the content from the content provider.

When the content is retrieved from the Service **200,** it may be processed by the Content Conversion **204** and Content Filters **224** to convert the content into a form suitable for the client device **212.** The Broadcast **234** function converts the content into a form suitable for the broadcast **234** network. The converted content is received by the client **212** over broadcast link **241.** Client **212** and Service **200** interact via Point-to-Point link **210** and Point-to-Point function **232,** which are part of Transport Conversion **207.** The service **200** may comprise shopping, audio/video, gaming, voting, advertisement, messaging, or any other service.

Client **212** communicates through Point-to-Point **232** communication link to the Service Platform **50** and Service **200.** Load Balancer **236** interacts with the Business Functions **206** to determine the optimal load distribution between the Broadcast **234** Communication link **241** and the Point-to-Point **232** Communication link **210.** The Platform Business Agents **226** use business rules **222** to control the interaction and exchange of information between the Service **200** and the client **212.** For example, the network operator may choose to prevent Service **200** access to user information. Service **200** must pay a fee based on the Business Rules 222 and Service data **216** to access the user information.

Viewer Manager **240** stores client/user information in User Data **220.** Platform Business Agents **226** control the flow of viewer information to the Service **200.** Transaction Manager **242** records transactional information exchanged between the service **200** and Client **212.** Based on the Business Rules **222** and the User Data **220,** Advertising Manager **244** determines which advertisements and which type of targeted advertisements will be presented to the client via Broadcast **234** link **241** and Point-to-Point **232** link **210.** The Service Platform Transaction Manager records all transactions in the Transaction Database to ensure accurate operator revenue collections (even when the STB is turned off) and subscriber profiles in Viewer Profile **162** and Viewer Category **160** (viewer buying and viewing habits), which provides added value data to the network operator. The viewer profile associated with a particular user or household also contains demographic information such as age, sex, and topics of interest (sports, soccer, etc.) derived from viewing habits, purchase history and participation in chat rooms.

The transaction log is also useful for mining a user's viewing and transaction data for generating cumulative user profiles or used for more sophisticated profiling techniques such as collaborative filtering. Viewers or clients are placed in one or more categories (e.g., "sports fan", "chef-French") based on viewer user profile. Categories enhance the network operator's ability to perform adaptive targeted advertising and broadcasting based on long term and short-term viewing and buying trends of the viewer/client. Categories may also be utilized to assign chat-room profiles or provide selected filtering at the STB of broadcasting of all available chat rooms, e.g., only filtering out and viewing cooking and sports chat rooms at the STB. In an alternative embodiment, chat rooms are selectively broadcast to a subset of clients depending on client information. The present invention collects viewer profiles from chat room participants to generate meta data about a chat room, that is, the demographics of participants in a particular chat room or rooms. Meta data may also be created by the present invention to relate a particular chat room to a particular program or featured artist such as a program star (e.g., David Duchovny of the X-Files) to be broad cast along with the audio visual content during a particular program.

As linking occurs, when a viewer click triggers the call of an E-Commerce application or service, the Service Platform determines the subscriber's navigation location and records it in the Transaction Database **158.** The Service Platform also determines and records when the viewer followed a link to a store, or which program the viewer was watching when he/she made the decision to purchase (referred to as an "impulse buy"). The Transaction Database **258** enables the operator to store and provide a detailed context and purchase history to subscriber. Such storage of context and purchase history is also useful to improve subscriber or viewer profile and category information and which can generate additional revenue and/or become part of a channel deal with an E-Commerce provider and determine promotion of particular chat rooms broadcast in a list of available chat rooms to the client devices associated the users/subscribers in an interactive television system.

Viewer Manager **252** manages subscriber/user registration **264,** preference, and profile information **262.** Viewer Manager **252** enables users to register and record personal information in a database. The personal information goes into a viewer profile and comprises viewing patterns, promotional preferences, personal, wallet and demographic information, etc. Based on this recorded information and the user's activities, the Viewer Manager **252** generates viewer profile information to categorize the user and produce targeted chat room promotions, chat rooms, services, content and advertisements to suit the user's profile **262** and expected preferences and needs. The Viewer Manager **252** also performs centralized updating of service and viewer parameters.

The Service Platform, via the SGW and supporting functions, enables network operators to control access to the viewer database and allow only those service providers who have a prior contract or agreement with the network operator to access privileged information (e.g., credit card numbers, viewer's actual name, home address, telephone number, social security number, etc.). For distributed functions, that is, when the client has sufficient processing power and storage, the Viewer Manager **252** enables access to personal and profile information stored on the client devices and enables the client devices to select user-preferred content. Clients select user-preferred content via business filters in the client device (e.g., STB). The business filters can be used to filter selected chat rooms from the broad cast.

The Viewer Manager **252** provides Household/Subscriber/STB (or other client device) identification and authentication in support of the Service Gateway and Parental Control functions. The Viewer Manager **252** supports Multiple Viewer identification and Registration authentication at a single STB through nicknames and personal identification numbers. The viewer identifier preferably is derived from the client device identifier number(s). The Viewer Manager **252** provides household and individual viewer profiling through logging, generation, and matchmaking linked to observed cumulative TV viewing and purchasing habits in support of SGW. The Viewer Manager supports Distributed data capture and storage between the Service Platform and the STB, and supports bi-directional synchronisation. The Viewer Manager **252** enables Distributed profile usage between all Service Platform applications and provides synchronisation with an external SMS/CRM. Viewer Manager information (identification and viewer profile, interests) are used to selectively route broadcast of chat rooms when desired or to control access to chat room content. Disconnected lurking and/or participation in chat rooms can be disabled for particular viewers identified in viewer information. Disabling lurking or participation in a chat room is useful for regulation of and enforcement of chat room participation guidelines for chat room specific appropriate language and topics for discussion.

The Viewer Manager **252** enables multiple viewer registrations for a single STB or client device using abstract viewer identifiers comprising nickname, full name and PIN Storage in the STB or other client device. Business Agents **226** enforce transactional business rules for interaction between service providers and viewers. Based on business rules, which are defined by the network operators and based on agreements with the service providers, the Business Agents **226** control transactions and service provider access to user information. Business Agents **226** insert, replace and delete viewer information during a transaction.

Business Agents **226** in conjunction with SGW **246** create sessions between subscribers and service providers. SGW/Business Agents **226** can control access to viewer information details and manipulate viewer information by inclusion, replacement and removal of viewer information presented to Service Providers. SGW/Business Agents provide default values and control access to user information. SGW/Business Agents also perform Transaction Logging, Messaging Logging, Load/Transaction Monitoring. Targeted Advertising Campaign management makes use of viewer profile data mining and analytic systems in order to propose the best selection of chat rooms, products, advertisements and timing for broadcast. The Service Platform provides rule based systems to create 'smart' advertising campaigns and chat room promotions. For example, participants in a Christian chat room can be targeted for notification of an upcoming chat room or program on the life of Jesus which can also be accompanied by related targeted advertisements broadcasts, such as advertisements for travel to the holy land. The targeted advertising campaigns are adaptive based on user preferences, user profiles, user chat room participation, user buying and viewing habits, and user demographics. Based on information coming from the viewer profiles of chat room participants, chat room meta data, Ad Content database, Campaign Rules database, Service Manager, and Carousel Manager, the present invention in conjucntion with the Ad Manager decides the best chat rooms and products to present to a particular viewer. Ad Manager triggers the Carousel Manager to rebuild the broadcast catalog of chat room promotions, targeted advertisements and filters. The present invention in conjunction with Ad Manager also interfaces with the Business Agents to propose advertising contents presented to the viewer while the viewer is on line.

Open Streamer packages a plurality of chat rooms and chat room promotions in a single stream of information. as N Service Platform carousels, one per transport stream, optimizing the bandwidth usage. STB client applications are broadcast with an advertisement library. This library performs Campaign acquisition, Matchmaking, Tracking and Reporting. The campaign acquisition client component runs in parallel with the client application, watching for the campaign carousel, caching information, and pre-fetching assets. The matchmaking client components evaluate each advertising campaign with local parameters (type of page displayed, user information, number of times campaign was ran, etc.) and accesses the best advertisements for display.

The SP in which the present invention resides, provides a system architecture that provides a comprehensive revenue solution for regulation of content, advertising, messaging services, E-Commerce and television commerce (T-Commerce) in an interactive television environment. The revenue solution of the SP in which the present resides, provides network operator control and optimal revenue participation by merchants, service providers, network operators and the Service Platform provider. The Service Platform provides a centralizing structure that enables creation of new revenue streams for network operators, solution providers and service providers.

The SGW enables the SP to hide the head-end operator's valuable subscriber profile database by requiring viewer information be given to a service exclusively by the network operator, and under the network operator's control. To protect the subscriber's identity, an abstracted user identifier (i.e., session identifier) is transmitted to the service during the session that the service transmits transaction details to the SP. The user identifier is session specific. There can be more than one user identifier and more than one viewer profile associated with a client, as when different family members use the same STB. Each family member and the household STB can be individually assigned a viewer profile and viewer identifier, viewer category, and tracked as to transactions for purchases/movie requests/viewing habits/etc., and profiled by the SP Viewer Manager. The information is used to select from available chat rooms for promotion in a broadcast and to enable or disable lurking on a per application basis. For example, a child protection filter may be installed so that chat rooms are filtered, based on the chat room meta data and the viewer profile, a child may lurk on a football program but not in a romantic chat room. Lurking is disabled or enabled by a filter being activated or deactivated in the STB client device depending on client identification and program content. The viewer identifiers are made available to the SGW. The service provider only knows the client or STB identifier through a session identifier. Only the network or head-end operator, by way of the SGW can resolve a session identifier into viewer information details (name, address, shipping information, etc.) needed for fulfilling an order. An exception can be made for a credit card number or other information, when the operator does not wish to perform credit card collections or other transactions.

The viewer manager **252** provides household/subscriber/STB (or other client device) identification and authentication in support of the SGW and parental control functions. The viewer manager **252** supports multiple viewer identification and registration authentication at a single STB through nicknames and/or personal identification numbers (PINs) plus, the viewer identifier derived from the client device identifier number(s), transaction history, viewer profiles, nicknames and personal identification numbers. The viewer manager **252** performs household and individual viewer profiling through logging, generation, and matchmaking linked to observed cumulative TV viewing and purchasing habits. The viewer manager supports distributed data capture and storage between the SP and the STB, and supports bi-directional synchronisation.

The viewer manager **252** enables distributed profile usage between all SP applications and provides synchronisation with an external SMS/CRM. The viewer manager **252** enables multiple viewer registrations for a single STB or client device using abstract viewer identifiers comprising pseudonyms or nicknames, full names and PIN storage in the STB or other client device.Business agents **226** enforce transactional business rules for interaction between service providers and viewers. Based on business rules, which are defined by the network operators and based on agreements with the service providers, the business agents **226** control transactions and service provider access to user information. Business agents **226** in support of SGW, supplement, add, replace and delete viewer information during a transaction based on the service provider agreements and abstract session identifiers.

SP provides STBs and/or clients with filters which selectively receive information in the broadcast path based on viewer profiling, so that only selected viewers having a particular filter set up in their STB captures content (advertising, information or A/V programming, etc.) in the broadcast stream. These filters enhance the adaptive and selective delivery aspects of the SP. The Carousel Manager provides a data carousel for Open Streamer. The Carousel Manager manages a carousel of data in real-time. The Carousel Manager complements Open Streamer. Carousel Manager provides a server component and an STB client OCOD library. The Carousel Server receives requests from applications to add to, remove from or otherwise change the carousels contents. As Carousel Manager receives a request, it treats it as a single transaction, and obtains all necessary data (usually through HTTP). The Carousel Manager generates new carousel index or carousel directory file as needed. Carousel Manager publishes the updated carousel directory to Open Streamer, thereby controlling Open Streamer's broadcast priorities and tracks.

Open Streamer is a software/hardware product that enables network operators to broadcast SP applications and data in their network broadcast. Open Streamer enables SP data and applications to be transmitted simultaneously with the network operator A/V programs. Open Streamer enables a data stream to be updated in real time to match the A/V contents. For example, a network operator can broadcast an interactive sports application along with the live broadcast of a sporting event. Open Streamer comprises two components, a common server DLL and a broadcast streamer. An application server (e.g., a weather application server) or the Carousel Builder in the SP calls the common server DLL to send the carousel data to the broadcast streamer. The broadcast streamer then performs multiplexing (according to code/data ratio and bit rate requirements) of the applications and A/V data and sends the multiplexed data to the broadcast equipment for broadcast.

The Service Gateway, SGW provides routing and SGW technology for low-end STBs to connect to a network backend infrastructure. SGW provides transport level protocol support between the STB/clients and SGW, for example, a sequential-stream protocol over raw sockets. DAML leverages this feature. DAML-Mail is a protocol subset of DAP. DAML-Mail is a mail domain specific protocol. This protocol is used to link STBs with IMAP, POP3 and SMTP services.

The messaging manager provides various types of message communications among the users and with outsiders (those that are not network service subscribers). For example, it enables users to send and receive email, to chat with other non-subscribers and to receive instant messages from non-subscribers. The email portion of the messaging manager contains a Fetchmail component connected to an Internet based email server such as IMAP, POP3 and other Webmail messages for the appropriate mail-hosting server.

Fetchmail manages all SP server-side mail management. Fetchmail translates DAP messages to IMAP, POP3 or Webmail messages for the appropriate mail hosting server. SGW routes DAP mail messages to "Fetchmail" for processing. Fetchmail responds with the appropriate response to the request. Fetchmail interfaces with IMAP servers. An email application is provided by the SP. All SP applications can 'send' email via the email service offered by SGW.

The chat SP service interfaces to a chat server or alternatively includes a chat server. Chat service is accessible through a dedicated chat application, but also from any SP application linking with the SP chat client DLL. By providing an interface between a chat and a program listing, a chat room can be created dynamically with a broadcast show. Applications and other services can use the SP "alert" service to trigger STB resident mini-applications. Alert utilizes the SP OMM extension and functionality of Open Streamer. The Email service uses alert triggers to inform the viewer of an incoming message.

The SP and SGW are preferably supported on Sun Solaris 7 data processing system with memory, monitor, GUI, mouse, keyboard and processor, which is well known in the art and available from Sun Microsystems. SGW runs as a UNIX daemon, is configured using a configuration file, and is started from the command line. Once a connection has been made between the SGW and the STB/client over a network, TCP/IP handles all communications between the other services. Besides handling different transport protocols, the SGW also routes messages to different service sub-systems depending on the configuration of SGW.

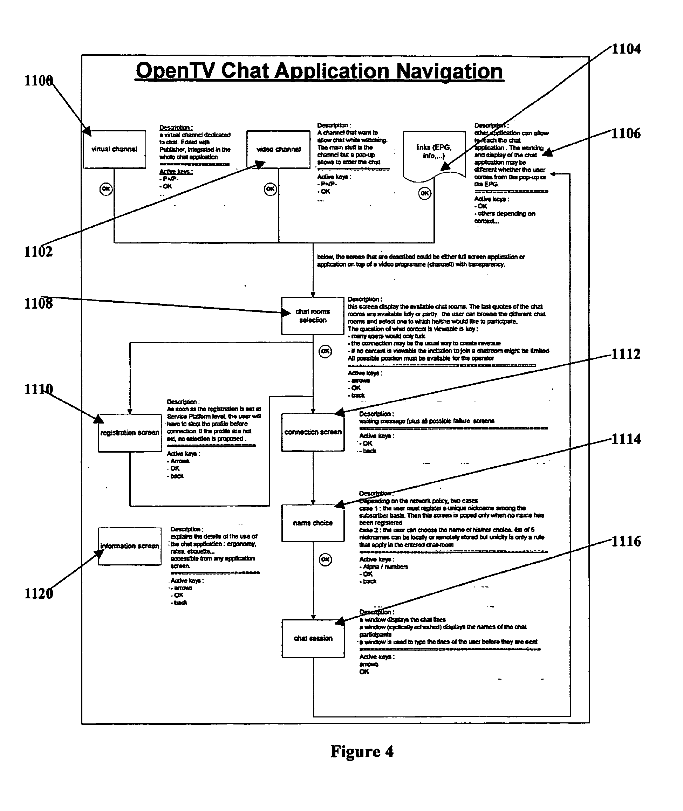

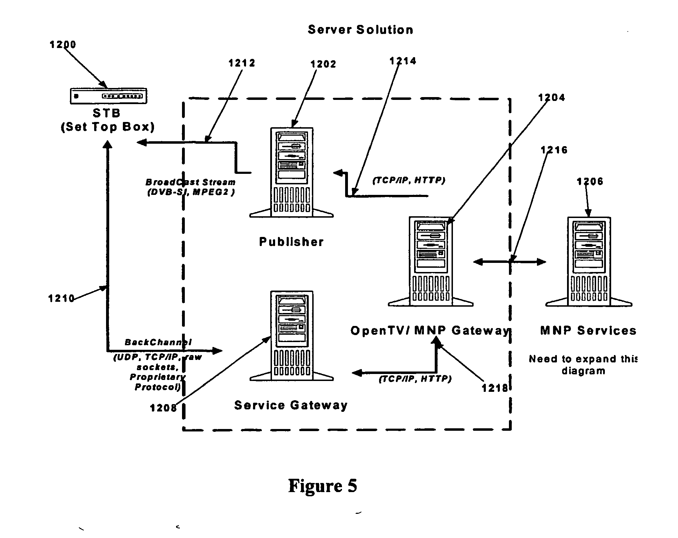

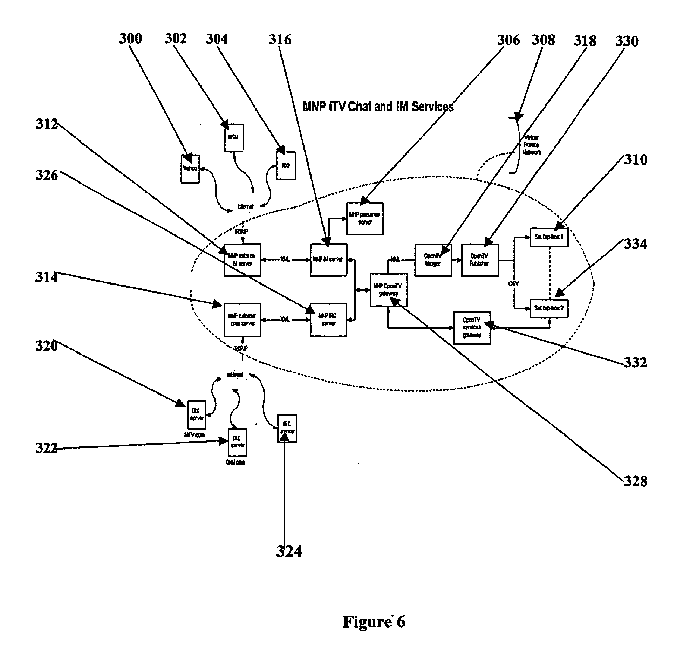

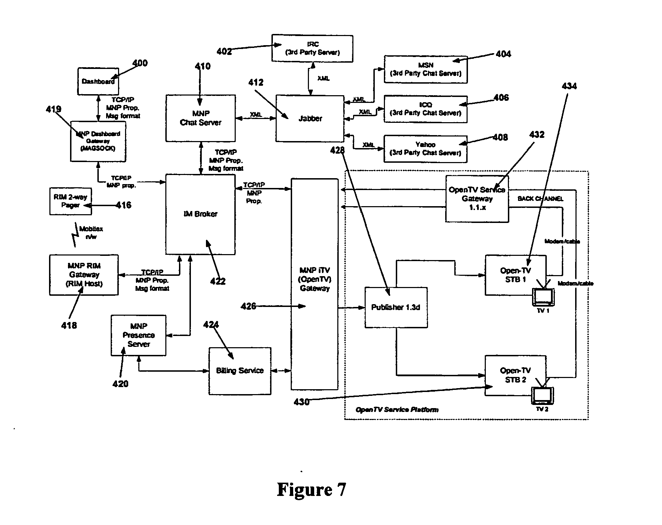

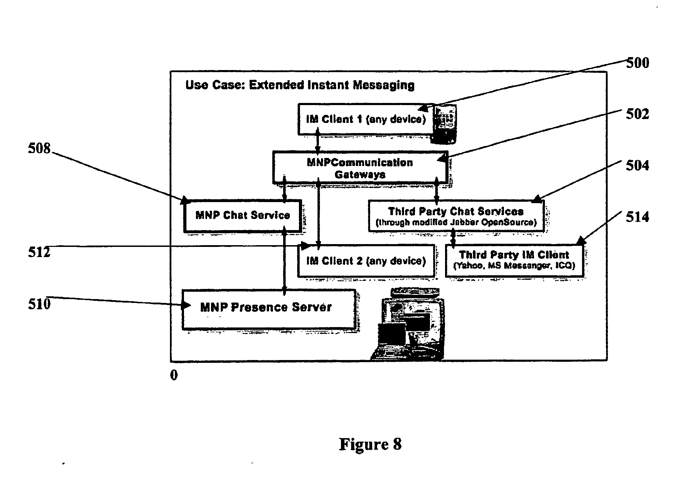

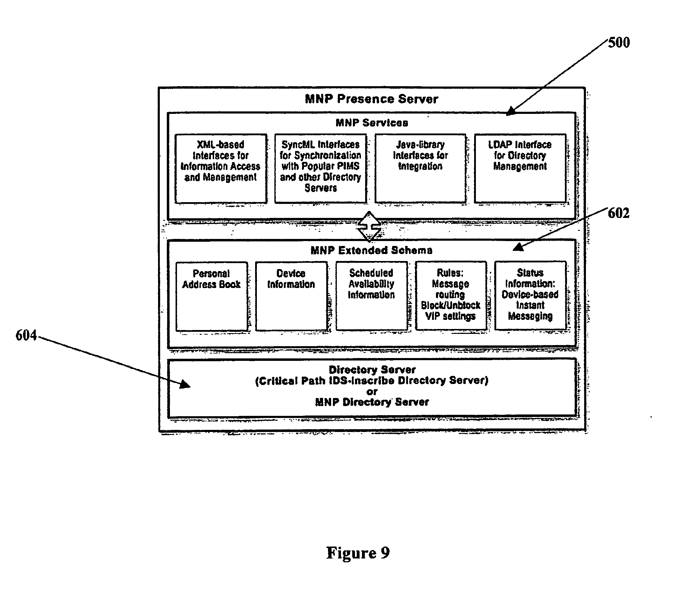

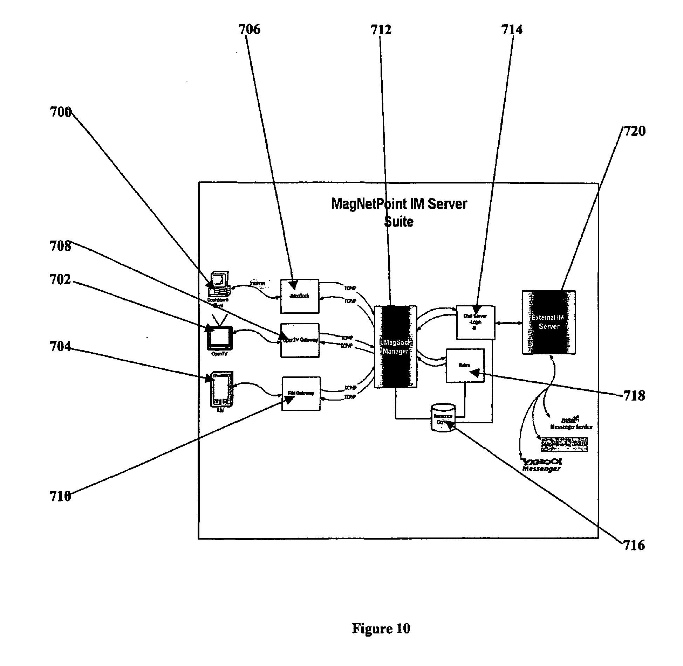

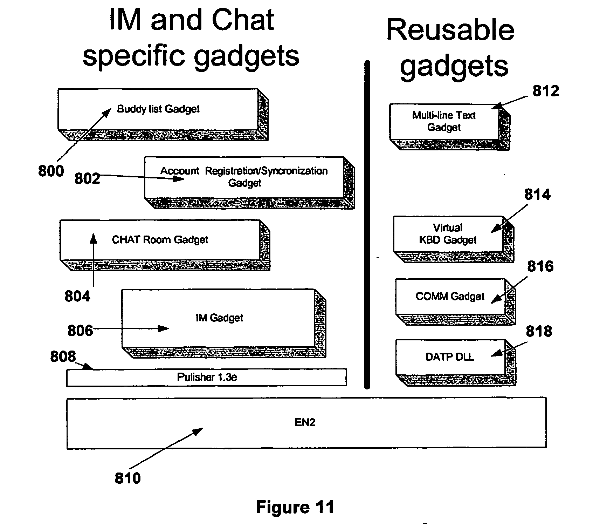

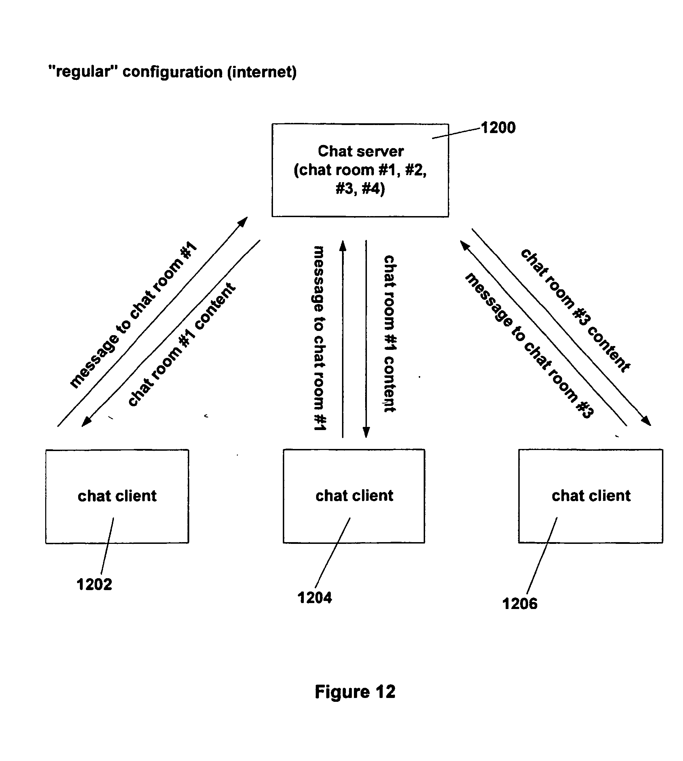

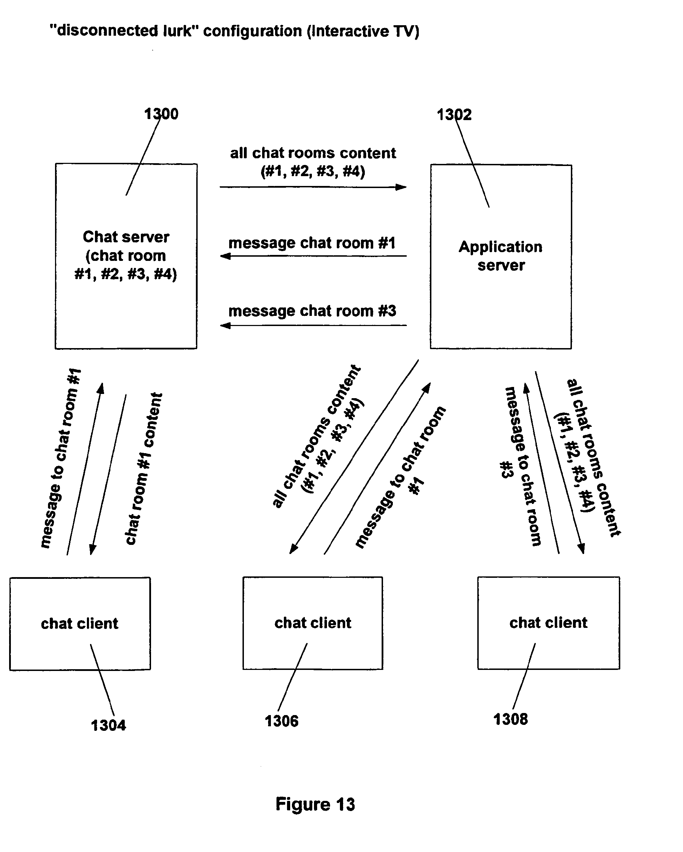

**Figure 3** illustrates a mid level architecture for a preferred embodiment of the service platform showing associated data bases. **Figure 4** illustrates a flow chart for the preferred Chat Application Navigation. **Figure 5** illustrates a preferred server solution with OTV publisher, Service Gateway, Set Top Box and associated communication paths. **Figure 6** is an illustration of interactive TV (iTV) Chat and Instant Messaging (IM). **Figure 7** is an illustration of the preferred Service Platform in communication with a preferred IM and Chat broker. **Figure 8** is an illustration of a preferred extended instant messaging. **Figure 9** is an illustration of a preferred presence server. **Figure 10** is an illustration of a preferred IM server. **Figure 11** is an illustration of preferred IM and Chat gadgets (task/methods). **Figure 12** is an illustration of regular communication methodology for internet chat room users. **Figure 13** is an illustration of the preferred communication methodology for iTV chat room users.

As shown in **Figure 12,** the typical internet chat room communication is illustrated. In the typical chat room communication mode, each of the chat room registered participants **1202, 1204** and **1206** receive content of a single chat room #1 from the chat server **1200.** These chat room participants are registered with the chat server **1200.** A chat room is defined and each participant is connected to the chat room server **1200** via a daemon in the PC. Thus, each chat room participant or viewer has a server to client connection to the chat room server **1200.**

In **Figure 13,** the disconnected chat room application server **1302** of the present invention, takes all chat room content (chat room numbers 1, 2, 3 and 4) from server **1200** and broadcasts it to unregistered and disconnected chat clients **1306** and **1308** who are lurking but are not connected via a back channel connection to the chat room or chat server **1200.**

The present invention broadcasts chat room #1 contents to chat participant **1304** who is logged onto and participating via messages over a back channel through the SP through the SGW to the chat server **1300** via the back channel and all or a selected subset of available chat rooms 1, 2, 3, 4 to non-participants **1306** and **1308** who are not registered, logged on or connected to the chat server **1200** via a back channel connection. The lurkers **1306** and **1308** can elect to sign on and register to participate in any available chat room via a back channel connection to the SP to the Chat Server and then send messages for posting in a selected chat room in which they are participating.

The present invention provides an enhancement to sporting events, reality shows and thematic programs by enabling an interactive television application server **1302** to broadcast chat room content and chat room promotions or other interactive content to all clients. Each client can then connect to the chat server **1200** via a back channel connection, cell phone Short Messaging Service through the SGW in the SP or a personal computer over the Internet to the SGW and participate in the chat room by posting messages or content to the chat room. Each client also has the option to remain disconnected and lurk or watch the chat room content broadcast while not connected to the chat server **1200** via the SP back channel. The present invention provides network operators with attractive commercial benefits, i.e., the heavy phone traffic generated by the users of this service creates a sizeable revenue source for Digital TV operators. Plus, by creating viewers chat communities, the chat application will reduce the churn rate by raising the exit costs.

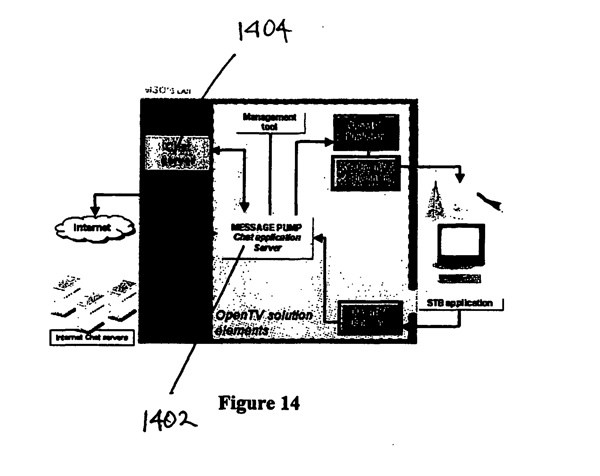

**Figure 14** illustrates a preferred message pump connected to the SGW service gateway in a preferred embodiment. The Message pump is preferably the core of the preferred Chat solution provided by the present invention. The Message Pump makes the link between the various IRC servers and the STB client via the SP and SGW. The functions of Message Pump are to retrieve the content of chat-rooms and transmit it to the Publisher pipeline so that it is broadcast to the subscribers; Convert the messages received from the STB (through OpenTV Gateway) and dispatch it to the proper chat servers (or through the return path directly to end users if they are private messages);
Replace blacklisted words by a preset character string; and manage both ways the private messages (these messages are the only ones that are not broadcast). The maximum of chat-rooms that are preferably handled by the message Pump is 300 although more can be configure to available bandwidth in the broadcast.

A chat server (also known as IRC Server) allows multiple users to connect to it and communicate with each other in real time. One IRC server normally has numerous channels or chat rooms. The present invention can connect to either internal (operated by the network or broadcaster) or external chat servers. Hereunder are described two typical situations corresponding to different needs in terms of configuration: A thematic channel (music, news...) that already operates chat-rooms on the web can use the preferred invention to interface with their existing chat-rooms. For example, a new thematic channel (Big Brother 24/7...) wants to launch dedicated chat-room on TV to enrich the TV show. They install a standard IRC server configured to handle the forecasted number of connections and host it on the same LAN as the rest of present invention Chat application. OpenTV Gateway provides the connectivity between the STB and the back-end servers and is used as part of the OpenTV Chat solution. It enables the STB to connect to the back-end systems through the (cable) modem return path and supports up to 1000 concurrent connections. As a critical part of the interactivity of Open TV Chat, it is included as part of the deliverables.

The present invention is integrated with OpenTV Instant Messaging. A link in the application will enable end-users to select one participant of the chat-room to initiate an Instant Messaging session (one-to-one communication). The present invention provides Icons / smiley so that end - users are able to include little drawings in their messages.

The present invention provides for Buddy-list management thus end - users are able to update their IM buddy-list from the OpenTV Chat application and they will be informed whether members of the IM buddy-list are participating to chat-rooms.

The present invention provides for video - scaling: as more and more STB will be able to re-scale video, a new version of the UI will be proposed that rescale the video and make the use of chat more convenient.

The present invention Chat application preferably uses OpenTV Streamer technology. OpenTV Streamer is the head-end solution that broadcasts multiple streams of data reliably and efficiently. This tool is particularly efficient for fast updates of data.

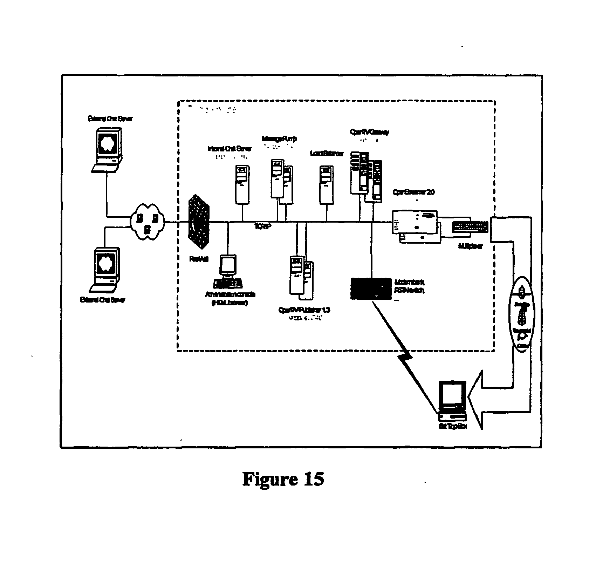

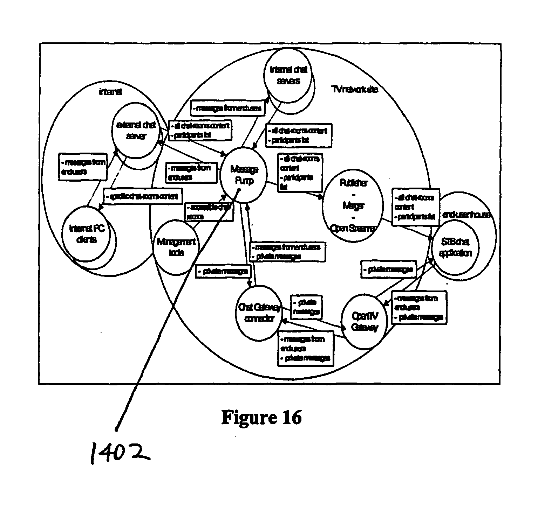

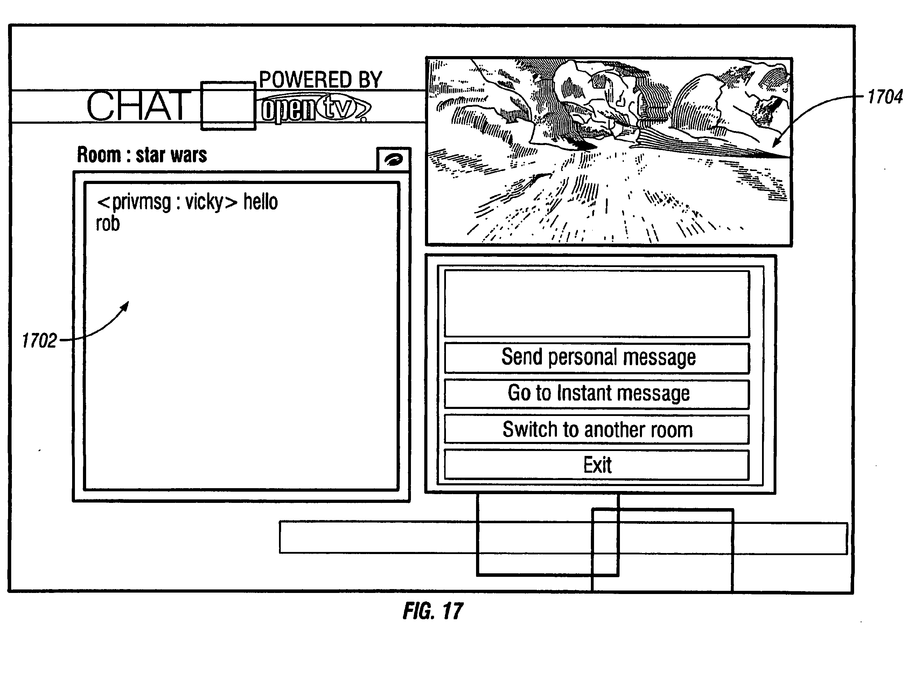

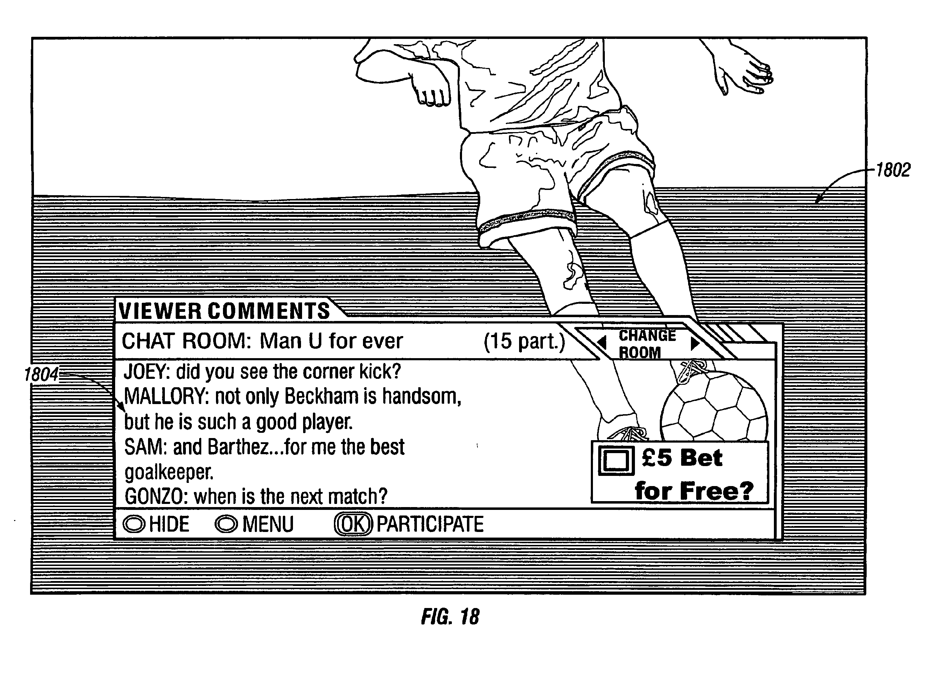

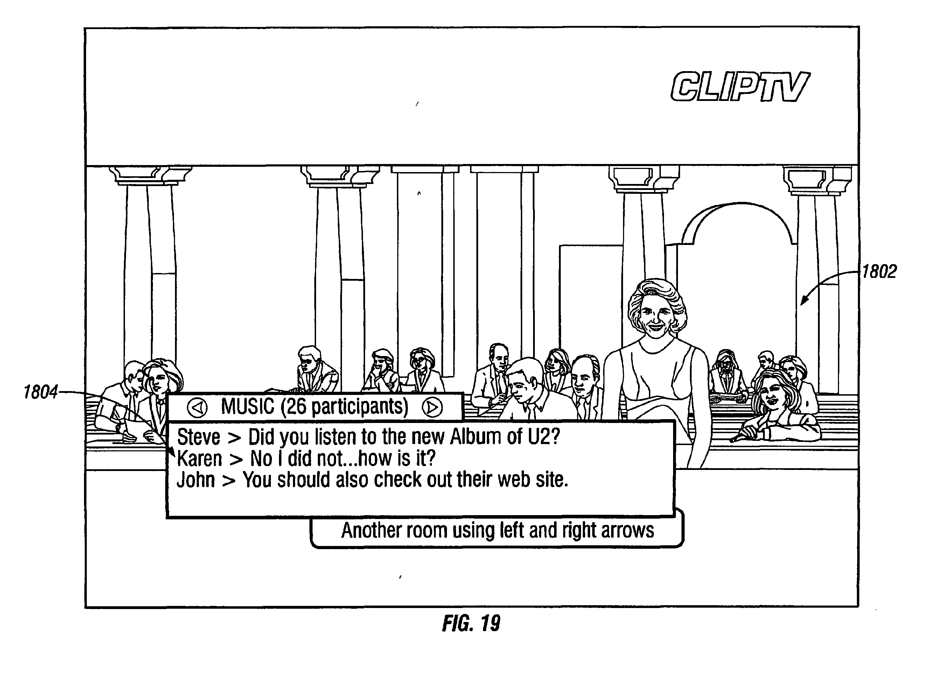

**Figure 15** illustrates a typical architecture for the present invention. **Figure 16** illustrates a preferred logical architecture for the present invention. **Figure 17** illustrates a movie channel example of the present invention. **Figure 18** illustrates a sporting event, enhanced TV-chat example of the present invention. **Figure 19** illustrates a lurking screen example of the present invention.

The chat community members typically bond together and thus want to stay with the operator. A buddy list management function increases the communities building function. Moreover, this "sticky" application (i.e., subscribers do not chum or turnover by tend to stick around and remain subscribers) helps the operators drive their subscriber/viewers to revenue generating applications (e.g., t-commerce, advertising). The method and apparatus of the present invention also enables the TV viewers to chat with other viewers. One major advantage of the present invention is the ability to enable a user to chat or lurk without making a connection to the chat server while watching specific programs and without having to leave the interactive TV environment.

The method and apparatus of the present invention of the present invention enables chat across network operators and regions. The chat application is available either from a dedicated virtual channel or from a "usual" video channel via an invitation pop-up icon on the viewer display. At the discretion of the network operator or broadcaster, the chat application is available for the viewers of an event. The chat application can be used on all or selected channels, or used only when triggered by an editing teams, e.g., for association with a specific program or programs. An authoring tool, integrated with publisher, enables the creation of chat-room names and builds schedules of broadcast. The present invention enables scheduling of chat rooms for broadcast in conjunction with particular programs, broadcast periodically, broadcast at schedule times or invoked and broadcast when users select the chat room from a client device. Management and supervision tools are provided in order to check the content of the chat rooms. The ability for users / viewers to personalize chat room or, at least, find users they like, is provided. Various types of pricing facilities are available to network operators: e.g., a per session, per time by subscription or per message charging. Viewers can also vote off viewers they do not like and such banned viewers can be disable from participating in the chat room and even banned from viewing the broadcast of the chat room by sending a filter to the client to eliminate decoding of the banned chat room.

The following is a description of an Enhanced TV Chat application on the "Big Brother" channel. From the viewers perspective: When the viewer zaps (selects, changes channels) to the 24/24 hours 7/7 days on the Big Brother channel, a popup menu appears on the screen for a few seconds that invites the user to join a chat room. At this point, a viewer may sign on or connect to the chat server via the back channel or simply lurk or watch the chat room while disconnected without signing on.

From the operator and channel editor perspective: A functional administrator follows the chat-room load message and the results (number of users per chat-rooms, peaks, and max number of chat rooms in case of cloning). An operator creates the chat-room name and sets the parameters of the systems (scheduling, automatic cloning of chat-rooms on/off, setting of max number of users, administration of moderation automatic tools such as objectionable words and a users black-list). The operator decides the chat room for which content is accessible freely. Moderators monitor the chat-rooms content in real time. Moderator administration tools enable them to visualize several chat-room displays at the same time. Moderators receive warnings when objectionable words are used (profanity, racism, etc.). An optional built in delay of a few seconds enables a moderator to intervene in any chat-room and send the message they want, remove users, censor words, and even ban a user (by profile if set and activated). Users can temporarily (for a set penalty period, e.g., 5 minutes or the remainder of the program) or permanently ban other users by voting them out of the chat room or by directing messages to others in the chat room to the exclusion of one user. A list of participants and an include/exclude recipient function is provided to facilitate selective message sending. Undesired or objectionable content is masked in the chat room presentation. Content can be masked or filtered based on a user viewer profile. In the case of a 12-year-old boy, a filter can be down loaded to the STB to enable lurking and/or participating in a baseball chat room, but not decoding, downloading, lurking or participating in a chat room containing objectionable matter, for example, adult matter.

The present invention is provided for both network operators and channel editors.

Network operators are often the most involved in the deployment of interactive services. They are the technology owners who direct specification and renting of the STBs. They provide interactive services for business reasons: loyalty building and complementary revenues. They often own and even operate channels by themselves. Channel editors are interested in the chat application. By driving audience on the channel and creating the opportunity to have viewers use the chat application, channels can contend for a part of the generated revenues. As an overlay on their video presentation, channels are key players in the decision of providing chat facilities as channels consider revenues, image, etc. The channel content generates the topics for the chat rooms, thus channels may create events about it and promote the feature. For example, a hotly contested football game may make for a lively chat room.

A broadcast path with a sufficient bandwidth is provided for the descending communications (from server broadcast to clients) and a back channel connection provided for ascending communications (from STB to server). There are numerous service operator business models, for example, revenue can be created by different means: pay per time (ideally fitting with premium calls charges); pay per session (linked to a programs, e.g. 1 euro for the 2 hour soccer match); or pay per month (unlimited use charged as a monthly subscription fee). For the operators, a key decision driver is the ownership of the return path channel, i.e., cable versus satellite.

The main features of the preferred Chat application are as follows. The Chat user has the option of selecting participation in a chat room from a list of Chat rooms or selecting a chat room associated with a given broadcast. Chat rooms that correlate with a user's viewer profile are promoted to the client device associated with the user. The chat room user logs into the chat room with a username chosen for each session, but unique on the chat server. A user identification information available from the STB identification information, user identifier or viewer manager viewer profile information is used to control access to lurking and participation in program content. The preferred chat application proposes that the user use one of the last used usernames (last 5, stored in STB). Once the registration has been implemented on the Service Platform, the list of the last usernames will be used as viable aliases to use in the Chat room service. The Chat service is implemented with and compliant with the IRC and IMPP standards. Users have access to chat without specific registration unless restricted by operators or participants. These messages are displayed the same as the other but only the selected recipients will see them. The users have the ability to invite another user into a "private room" where they may exchange private messages. The service enables a viewer to lurk via a broadcast or participate in more than one chat rooms at time. This number of currently active chat rooms allowed per viewer is technically limited by both bandwidth and STB resource limitations. The operator of the chat service decides on the availability and scale of this feature. A flow chart of the application on the STB is shown in **Figure 4**. Several chat rooms are broadcast together enabling the user to see them all with a back channel connection. In a connected paradigm, such as the connected method used by Internet chat rooms and users on personal computers, a user must login to each chat room to see it's contents. Thus, a user has to sign on to four chat rooms to receive content from each of four chat rooms (connected lurk).

The preferred graphic elements are aesthetically compatible, correlate visually and are consistent with other products provided by the headend. Logo and advertisement location is consistent in all the screens, keeping in mind that this is integrated in the advertising tool of publisher **1202**. Depending upon whether the application runs in a standalone mode or on a video channel the graphical user interface (GUI) presented is different. When the application runs on a video channel, it enables the viewer to watch the current program by way of a bottom banner / transparency. Thus, two GUIs are defined.

The following screen definitions detail the preferred screens, although it is not an exhaustive list. The first screen of the virtual channel displays an invitation to join a chat room interactivity. A splash screen is included to make it more appealing. This screen can be the entry point of an iTV services portal. When presented on a video channel, a pop-up menu invites the viewer to join the chat sessions. This pop-up appears when zapping (changing channels) is just finished (informing the viewer that the channel includes an interactive chat). This pop-up disappears after a while according to client policy. This pop-up does not appear again during the program. If the client wants the pop-up to appear again (e.g. cyclically or triggered by a management tool) this is selectable by the client.

The chat application may be launched by other applications such as portals, EPG, navigation etc. Data may be transferred and shared between applications. The first chat screen presented to the user is the chat-room selection screen. The list of chat-rooms is classified according to themes selected by the operator. Only accessible chat-rooms are displayed. Next to each room is an indicator showing the total of active users currently participating in the chat room. In case the number of people per chat-room is limited, another indicator displays whether or not the chat-room is full. The user selects the chat room he/she wants to access for participation or merely lurking. A user can not sign into a full chat room but may lurk in it. Content of part or whole of the chat-rooms is viewable.

Before connecting to a chat-room, when case profiles are declared, the user selects the profile to which he/she corresponds from a profile selection screen. In case no profile is declared, the screen is skipped. A user may assume a profile including a language to be translated into the language of the chat room, e.g., French to English or German to French. The viewer is promoted to enter the username he/she wants to use. The last 5 used usernames are proposed to simplify the typing phase for inputting a user name.

A chat session screen comprises 3 main parts. Part 1: the chat-room participants. This list is updated in real time; Part 2: the chat-room "output". The lines of the participants are displayed; and Part 3: the chat-room "input". With this line the viewer types his/her text before sending it. The chat session screen enables moving from one chat room to another or participating in more than one chat room at one time. Different colors are used for the different users. The users are able to change their usernames. In the case of a full screen application (dedicated channel), the user interface allows several chat-rooms to be displayed.

An information screen is available from any screen except the connection screen. It enables the viewer to browse chat related information: tariffs, usage, etiquette, etc. A connection screen displays animation during the time the connection to the application server is made. If no infrared keyboard is detected the virtual keyboard is suggested to the user. The full screen application will propose 2 keyboards. The video channel implementation proposes only the less space-consuming keyboard (one way alphabet scroll).

Preferably, the same application can be used by an operator within different contexts (e.g. user comes from hyperlink, menu, channel 1, channel 2). But in order to save bandwidth the application code and data are broadcast only once (at least once per transponder). At the same time, the operator selects the application but reacts differently according to the context (display of the proper channel logo, pop-up enabled or not, position of the on-screen display, etc.). The proper code is provided in order that such integration is easily done.

An authoring tool provided to create / modify / erase the name of the chat-rooms; schedule diffusion of the chat-rooms (especially for chat over video channels); and select the chat-rooms whose content is to be broadcast. The authoring application runs on a workstation connected to a LAN of the network operator enabling interface with OpenTV Publisher merger and application server (chat-rooms definition) and OpenStreamer (diffusions and scheduling). This authoring tool is independent of the workstation type (PC/Mac/...).

A management tool is provided used monitor the chat-room participant numbers and the load of the system; monitor the chat room contents; intervene in chat-rooms for moderation; disconnect undesirable users and/or users (those violating rules or policies); and manage a black-list of users or objectionable words that can be used either for selective censorship or for detecting chat-rooms that may break the rules of the chat that are set by the channel or the operator.

This application supports multiple instances and can run on workstations connected to the network operator's LAN in order to interface with the Chat Server. A robot or automatic monitoring/censorship application is provided for moderation and generation of messages and masking of broadcast or server transmitted chat room content, according to specific content: age-restricted, pornography, racism, etc. Objectionable content is selectively masked so some or all users or selected users do not see or hear it. For example, a child may not see profanity that an adult lurker or participant sees. This tool provides a web interface for access to the above functionality to ensure that it is available across the service platform. It works with a browser, running on a PC, MAC/OS, unix or linux workstation.

The application server/s receives text sent by chat-rooms users and broadcasts via return path and/or broadcast (if not the same) the content of chat-rooms; creates new clones of chat-rooms when the maximum number of users is reached and provides an interface with the account management system. The preferred server supports SNMP protocol for remote monitoring and administration and also supports an integrated management tool to start/stop and re-configure any of the configuration parameters necessary for administration and running of the servers. An API provides for retrieving of consumption data (account connected, time, duration, Chat_room_ID, channel...)

The hardware for hosting the application servers are preferably platform independent. The chat application is integrated with Service Platform, and the application servers will interface with Publisher merger, OpenStreamer and the Service Gateway. The chat application preferably runs on the EN2 Operating System with TCP-IP but can be customized to fit any TV operator specific requirement.

The data stored in client (STB) RAM is Application code and graphic elements; Buffer size for at least one chat-room (20 lines of dialogue), but can be as many as possible chat-rooms displayed at the same time; Names of the chat-rooms with the number of connected people; and Usemames of those connected to at least one chat-room. The data stored in flash is the last 5 usernames. The STB also enables selection and storage of a fist chat room participant's nickname in a second chat room participant's buddy list. The preferred invention notifies the second user when a member of its buddy list signs onto a particular chat room, for example, a metaphysics discussion group. The second user can also be notified if any member of it's buddy list signs onto any chat room of which the present invention is aware.

The modem sends and receives the lines of text at a convenient rate for the users to use the service i.e., less than 3 seconds for display once the data is sent by the user.

Bandwidth considerations include the following: What is broadcast (Application code and graphic elements); names and details of the chat-rooms; and the last dialogue line of all the accessible chat-rooms. Cross-platform chat (with web, other networks, etc. ) is also provided along with the ability to resize video in different client formats and the creation of new chat-room at users will.

The preferred invention preferably handles a subscriber base of 10 million, with a maximum of 5% participating to the chat. The time between which the user sends text to the chat-room and the time it is displayed on the screen preferably does not exceed 3 seconds. The network operator is provided all necessary tools to monitor, control and quickly modify the contents of the chat. The following section details some of the key quality requirements that the Chat product will aim to achieve. These requirements are used to measure the reliability and usability of the Chat product.

The quality factors consideration comprise the time necessary for chat participant to receive and see a text sent by another participant; the number of lines that are missed or not received properly in real conditions; the visual presentation and handling of inappropriate dialog; a simplistic ability to customize the graphics and layout of the application (Publisher extension coding); high scalability and resilience of the application servers supporting the Chat application; seamless integration with the Instant Messaging Product; and appropriate warnings and messages for users in case of problems (connection lost, max user number reached).

The present invention has been described in interactive television in a preferred embodiment, however, the present invention may also be embodied in a distributed computer system comprising a server and a client device. In another embodiment, the present invention is implemented as a set of instructions on a computer readable medium, comprising ROM, RAM, CD ROM, Flash or any other computer readable medium, now known or unknown that when executed cause a computer to implement the method of the present invention.

While the foregoing disclosure is directed to the preferred embodiments of the invention various modifications will be apparent to those skilled in the art. It is intended that all variations within the scope of the appended claims be embraced by the foregoing disclosure. Examples of the more important features of the invention have been summarized rather broadly in order that the detailed description thereof that follows may be better understood, and in order that the contributions to the art may be appreciated. There are, of course, additional features of the invention that will be described hereinafter and which will form the subject of the claims appended hereto.

## Claims

1. A method for broadcasting a chat room in an interactive television environment, said method comprising:
registering one or more television subscribers with a chat room server associated with a television broadcast station;
receiving chat room message input from said one or more registered subscribers at the chat room server;
broadcasting said message input to one or more unregistered television subscribers, wherein said unregistered subscribers arc not permitted to provide message input to said chat server; and
displaying the message input on a display associated with the unregistered television subscribers.

2. The method of claim 1, further comprising:
conveying the message input received at the chat room server to a disconnected chat room application server prior to broadcasting said message input to the unregistered subscribers.

3. The method of claim 1, wherein registered subscribers have an established back channel connection with said chat room server, and wherein unregistered subscribers do not have an established back channel connection with said chat room server.

4. The method of claim 1, further comprising broadcasting chat room content along with television content to at least one client device associated with a user.

5. The method of claim 1, further comprising:
collecting viewer profile information corresponding to a chat room user; and
promoting a selected chat room to said user;
wherein a selection of said chat room is based upon the viewer profile for the user.

6. The method of claim 5, wherein said viewer profile information is based upon the user's message input in a chat room.

7. The method of claim 5, wherein the viewer profile information is based upon the user's television viewing habits.

8. The method of claim 5, further comprising sending targeted advertisements to the user based upon the user's participation in a chat room.

9. The method of claim 1, further comprising:
collecting viewer profile information corresponding to a chat room user;
generating a content filter based upon said viewer profile;
conveying said content filter to a client device associated with the user;
broadcasting message input which corresponds to a plurality of chat rooms;
using said filter in said client device to identify one or more chat rooms of said plurality of chat rooms which correspond to said viewer profile; and
presenting only the identified chat rooms to the viewer.

10. The method of claim 1, further comprising:
collecting viewer profile information corresponding to a chat room user;
generating a content filter based upon said viewer profile;
conveying said content filter to a client device associated with the user; and
using said filter in said client device to selectively prevent the display of received chat room content which is deemed offensive.

11. A computer readable medium containing computer readable instructions, wherein said instructions arc executable to:
register one or more television subscribers with a chat room server associated with a television broadcast station;
receive chat room message input from said one or more registered subscribers at the chat room server;
broadcast said message input to one or more unregistered television subscribers, wherein said unregistered subscribers are not permitted to provide message input to said chat server; and
display the message input on a display associated with the unregistered television subscribers.

12. The medium of claim 11, wherein said instructions are further executable to:
convey the message input received at the chat room server to a disconnected chat room application server prior to broadcasting said message input to the unregistered subscribers.

13. The medium of claim 11, wherein registered subscribers have an established back channel connection with said chat room server, and wherein unregistered subscribers do not have an established back channel connection with said chat room server.

14. The medium of claim 11, wherein said instructions are further executable to broadcast chat room content along with television content to at least one client device associated with a user.

15. The medium of claim 11, wherein said instructions are further executable to:
collect viewer profile information corresponding to a chat room user; and
promote a selected chat room to said user;
wherein a selection of said chat room is based upon the viewer profile for the user.

16. The medium of claim 15, wherein said viewer profile information is based upon the user's message input in a chat room.

17. The medium of claim 15, wherein the viewer profile information is based upon the user's television viewing habits.

18. The medium of claim 15, wherein said instructions are further executable to send targeted advertisements to the user based upon the user's participation in a chat room.

19. The medium of claim 11, wherein said instructions are further executable to:
collect viewer profile information corresponding to a chat room user;
generate a content filter based upon said viewer profile;
convey said content filter to a client device associated with the user;
broadcast message input which corresponds to a plurality of chat rooms;
use said filter in said client device to identify one or more chat rooms of said plurality of chat rooms which correspond to said viewer profile; and
present only the identified chat rooms to the viewer.

20. The medium of claim 11, wherein said instructions are further executable to:
collect viewer profile information corresponding to a chat room user;
generate a content filter based upon said viewer profile;
convey said content filter to a client device associated with the user; and
use said filter in said client device to selectively prevent the display of received chat room content which is deemed offensive.

## Patentansprüche

1. Verfahren zum Broadcasten eines Chatroom in einer interatkiven Fernsehumgebung,
wobei das genannte Verfahren die folgenden Schritte umfasst:
Registrieren von einem oder mehreren Fernsehabonnenten mit einem Chatroom-Server in Verbindung mit einer Fernsehsendestation;
Empfangen von Chatroom-Meldungseingängen von den genannten ein oder mehreren registrierten Abonnenten am Chatroom-Server;
Broadcasten der genannten Meldungseingänge zu einem oder mehreren unregistrierten Fernsehabonnenten, wobei die genannten unregistrierten Abonnenten keine Meldungseingänge zu dem genannten Chat-Server senden dürfen; und
Anzeigen der Meldungseingänge auf einem Display in Verbindung mit den unregistrierten Fernsehabonnenten.

2. Verfahren nach Anspruch 1, das ferner das Übertragen der am Chatroom-Server empfangenen Meldungseingänge zu einem abgetrennten Chatroom-Applikationsserver vor dem Broadcasten der genannten Meldungseingänge zu den unregistrierten Abonnenten umfasst.

3. Verfahren nach Anspruch 1, wobei registrierte Abonnenten eine stehende Rückkanalverbindung mit dem genannten Chatroom-Server haben, und wobei unregistrierte Abonnenten keine stehende Rückkanalverbindung mit dem genannten Chatroom-Server haben.

4. Verfahren nach Anspruch 1, das ferner das Broadcasten von Chatroom-Inhalt zusammen mit Fernsehinhalt zu wenigstens einem Client-Gerät in Verbindung mit einem Benutzer beinhaltet.

5. Verfahren nach Anspruch 1, das ferner die folgenden Schritte umfasst:
Sammeln von Zuschauerprofilinformationen, die einem Chatroom-Benutzer entsprechen; und
Werben für einen gewählten Chatroom bei dem genannten Benutzer;
wobei eine Wahl des genannten Chatrooms auf dem Zuschauerprofil für den Benutzer basiert.

6. Verfahren nach Anspruch 5, wobei die genannten Zuschauerprofilinformationen auf den Meldungseingängen des Benutzers in einem Chatroom basieren.

7. Verfahren nach Anspruch 5, wobei die Zuschauerprofilinformationen auf den Fernsehgewohnheiten des Benutzers basieren.

8. Verfahren nach Anspruch 5, das ferner das Senden von gezielten Werbesendungen zu dem Benutzer auf der Basis der Teilnahme des Benutzers an einem Chatroom beinhaltet.

9. Verfahren nach Anspruch 1, das ferner die folgenden Schritte beinhaltet:
Sammeln von Zuschauerprofilinformationen, die einem Chatroom-Benutzer entsprechen;
Erzeugen eines Inhaltsfilters auf der Basis des genannten Zuschauerprofils;
Übertragen des genannten Inhaltsfilters zu einem Client-Gerät in Verbindung mit dem Benutzer;
Broadcasten von Meldungsinhalt, der mehreren Chatrooms entspricht;
Benutzen des genannten Filters in dem genannten Client-Gerät, um einen oder mehrere Chatrooms aus der genannten Mehrzahl von Chatrooms zu identifizieren, die dem genannten Zuschauerprofil entsprechen; und
Präsentieren dem Zuschauer nur die identifizierten Chatrooms.

10. Verfahren nach Anspruch 1, das ferner die folgenden Schritte beinhaltet:
Sammeln von Zuschauerprofilinformationen, die einem Chatroom-Benutzer entsprechen;
Erzeugen eines Inhaltsfilters auf der Basis des genannten Zuschauerprofils;
Übertragen des genannten Inhaltsfilters zu einem Client-Gerät in Verbindung mit dem Benutzer; und
Benutzen des genannten Filters in dem genannten Client-Gerät, um selektiv die Anzeige von empfangenem Chatroom-Inhalt zu verhindern, der als anstößig angesehen wird.

11. Rechnerlesbares Medium, das rechnerlesbare Befehle enthält, wobei die genannten Befehle ausgeführt werden können, um:
einen oder mehrere Fernsehabonnenten mit einem Chatroom-Server in Verbindung mit einer Fernsehsendestation zu registrieren;
Chatroom-Meldungseingänge von den genannten ein oder mehreren registrierten Abonnenten am Chatroom-Server zu empfangen;
die genannten Meldungseingänge zu einem oder mehreren unregistrierten Fernsehabonnenten zu broadcasten, wobei die genannten unregistrierten Abonnenten keine Meldungseingänge zu dem genannten Chat-Server senden dürfen; und
die Meldungseingänge auf einem Display in Verbindung mit den unregistrierten Fernsehabonnenten anzuzeigen.

12. Medium nach Anspruch 11, wobei die genannten Befehle ferner ausgeführt werden können, um die am Chatroom-Server empfangenen Meldungseingänge vor dem Broadcasten der genannten Meldungseingänge zu den unregistrierten Abonnenten zu einem abgetrennten Chatroom-Applikationsserver zu übertragen.

13. Medium nach Anspruch 11, wobei registrierte Abonnenten eine stehende Rückkanalverbindung mit dem genannten Chatroom-Server haben und wobei unregistrierte Abonnenten keine stehende Rückkanalverbindung mit dem genannten Chatroom-Server haben.

14. Medium nach Anspruch 11, wobei die genannten Befehle ferner ausgeführt werden können, um Chatroom-Inhalt zusammen mit Fernsehinhalt zu wenigstens einem Client-Gerät in Verbindung mit einem Benutzer zu broadcasten.

15. Medium nach Anspruch 11, wobei die genannten Befehle ferner ausgeführt werden können, um:
Zuschauerprofilinformationen zu sammeln, die einem Chatroom-Benutzer entsprechen; und
bei dem genannten Benutzer für einen gewählten Chatroom zu werben;
wobei eine Wahl des genannten Chatrooms auf dem Zuschauerprofil für den Benutzer basiert.

16. Medium nach Anspruch 15, wobei die genannten Zuschauerprofilinformationen auf den Meldungseingängen des Benutzers in einem Chatroom basieren.

17. Medium nach Anspruch 15, wobei die Zuschauerprofilinformationen auf den Fernsehgewohnheiten des Benutzers basieren.

18. Medium nach Anspruch 15, wobei die genannten Befehle ferner ausgeführt werden können, um gezielte Werbesendungen zu dem Benutzer auf der Basis der Teilnahme des Benutzers an einem Chatroom zu senden.

19. Medium nach Anspruch 11, wobei die genannten Befehle ferner ausgeführt werden können, um:
Zuschauerprofilinformationen zu sammeln, die einem Chatroom-Benutzer entsprechen;
einen Inhaltsfilter auf der Basis des genannten Zuschauerprofils zu erzeugen;
den genannten Inhaltsfilter zu einem Client-Gerät in Verbindung mit dem Benutzer zu übertragen;
Meldungseingänge zu broadcasten, die mehreren Chatrooms entsprechen;
den genannten Filter in dem genannten Client-Gerät zu benutzen, um einen oder mehrere Chatrooms aus der genannten Mehrzahl von Chatrooms zu identifizieren, die dem genannten Zuschauerprofil entsprechen; und
dem Zuschauer nur die identifizierten Chatrooms zu präsentieren.

20. Medium nach Anspruch 11, wobei die genannten Befehle ferner ausgeführt werden können, um:
Zuschauerprofilinformationen zu sammeln, die einem Chatroom-Benutzer entsprechen;
einen Inhaltsfilter auf der Basis des genannten Zuschauerprofils zu erzeugen;
den genannten Inhaltsfilter zu einem Client-Gerät in Verbindung mit dem Benutzer zu übertragen; und
den genannten Filter in dem genannten Client-Gerät zu benutzen, um die Anzeige von empfangenem Chatroom-Inhalt zu verhindern, der anstößig angesehen wird.

## Revendications

1. Un procédé pour diffuser un forum de discussion dans un environnement de télévision interactive, ledit procédé comprenant :
l'inscription d'un ou plusieurs abonnés à la télévision sur un serveur de forum de discussion associé à une station de télédiffusion ;
la réception d'une entrée de message de forum de discussion desdits un ou plusieurs abonnés inscrits sur le serveur de forum de discussion ;
la diffusion de ladite entrée de message à un ou plusieurs abonnés à la télévision non inscrits,
où lesdits abonnés non inscrits ne sont pas autorisés à fournir une entrée de message audit serveur de forum de discussion ; et
l'affichage de l'entrée de message sur un écran associé aux abonnés à la télévision non inscrits.

2. Le procédé selon la Revendication 1, comprenant en outre :
l'acheminement de l'entrée de message reçue sur le serveur de forum de discussion vers un serveur d'application de forum de discussion déconnecté avant la diffusion de ladite entrée de message aux abonnés non inscrits.

3. Le procédé selon la Revendication 1, où les abonnés inscrits possèdent une connexion de canal retour établie avec ledit serveur de forum de discussion et où les abonnés non inscrits ne possèdent pas de connexion de canal retour établie avec ledit serveur de forum de discussion.

4. Le procédé selon la Revendication 1, comprenant en outre la diffusion de contenus de forum de discussion parallèlement à des contenus télévisuels vers au moins un dispositif client associé à un utilisateur.

5. Le procédé selon la Revendication 1, comprenant en outre :
la collecte d'informations de profil de téléspectateur correspondant à un utilisateur de forum de discussion ; et
la promotion audit utilisateur d'un forum de discussion sélectionné ;
où la sélection dudit forum de discussion s'appuie sur le profil de téléspectateur de l'utilisateur.

6. Le procédé selon la Revendication 5, où lesdites informations de profil de téléspectateur s'appuient sur l'entrée de message de l'utilisateur dans un forum de discussion.

7. Le procédé selon la Revendication 5, où les informations de profil de téléspectateur s'appuient sur les habitudes de visionnage de la télévision de l'utilisateur.

8. Le procédé selon la Revendication 5, comprenant en outre l'envoi de publicités ciblées à l'utilisateur en s'appuyant sur la participation de l'utilisateur à un forum de discussion.

9. Le procédé selon la Revendication 1, comprenant en outre :
la collecte d'informations de profil de téléspectateur correspondant à un utilisateur de forum de discussion ;
la génération d'un filtre de contenus s'appuyant sur ledit profil de téléspectateur ; l'acheminement dudit filtre de contenus vers un dispositif client associé à l'utilisateur ; la diffusion d'une entrée de message qui correspond à une pluralité de forums de discussion ;
l'utilisation dudit filtre sur ledit dispositif client afin d'identifier un ou plusieurs forums de discussion de ladite pluralité de forums de discussion qui correspondent audit profil de téléspectateur ; et
la présentation des seuls forums de discussion identifiés au téléspectateur.

10. Le procédé selon la Revendication 1, comprenant en outre :
la collecte d'informations de profil de téléspectateur correspondant à un utilisateur de forum de discussion ;
la génération d'un filtre de contenus s'appuyant sur ledit profil de téléspectateur ; l'acheminement dudit filtre de contenus vers un dispositif client associé à l'utilisateur ; et
l'utilisation dudit filtre sur ledit dispositif client pour empêcher de manière sélective l'affichage de contenus reçus de forum de discussion qui sont considérés comme étant offensants.

11. Un support lisible par ordinateur contenant des instructions lisibles par ordinateur, où lesdites instructions sont exécutables pour :
l'inscription d'un ou plusieurs abonnés à la télévision sur un serveur de forum de discussion associé à une station de télédiffusion ;
la réception d'une entrée de message de forum de discussion desdits un ou plusieurs abonnés inscrits sur le serveur de forum de discussion ;
la diffusion de ladite entrée de message à un ou plusieurs abonnés à la télévision non inscrits, où lesdits abonnés non inscrits ne sont pas autorisés à fournir une entrée de message audit serveur de forum de discussion ; et
l'affichage de l'entrée de message sur un écran associé aux abonnés à la télévision non inscrits.

12. Le support selon la Revendication 11, où lesdites instructions sont également exécutables pour :
l'acheminement de l'entrée de message reçue sur le serveur de forum de discussion vers un serveur d'application de forum de discussion déconnecté avant la diffusion de ladite entrée de message aux abonnés non inscrits.

13. Le support selon la Revendication 11, où les abonnés inscrits possèdent une connexion de canal retour établie avec ledit serveur de forum de discussion et où les abonnés non inscrits ne possèdent pas de connexion de canal retour établie avec ledit serveur de forum de discussion.

14. Le support selon la Revendication 11, où lesdites instructions sont également exécutables pour la diffusion de contenus de forum de discussion parallèlement à des contenus télévisuels vers au moins un dispositif client associé à un utilisateur.

15. Le support selon la Revendication 11, où lesdites instructions sont également exécutables pour :
la collecte d'informations de profil de téléspectateur correspondant à un utilisateur de forum de discussion ; et
la promotion audit utilisateur d'un forum de discussion sélectionné ;
où la sélection dudit forum de discussion s'appuie sur le profil de téléspectateur de l'utilisateur.

16. Le support selon la Revendication 15, où lesdites informations de profil de téléspectateur s'appuient sur l'entrée de message de l'utilisateur dans un forum de discussion.

17. Le support selon la Revendication 15, où les informations de profil de téléspectateur s'appuient sur les habitudes de visionnage de la télévision de l'utilisateur.

18. Le support selon la Revendication 15, où lesdites instructions sont également exécutables pour l'envoi de publicités ciblées à l'utilisateur en s'appuyant sur la participation de l'utilisateur à un forum de discussion.

19. Le support selon la Revendication 11, où lesdites instructions sont également exécutables pour :
la collecte d'informations de profil de téléspectateur correspondant à un utilisateur de forum de discussion ;
la génération d'un filtre de contenus s'appuyant sur ledit profil de téléspectateur ; l'acheminement dudit filtre de contenus vers un dispositif client associé à l'utilisateur ; la diffusion d'une entrée de message qui correspond à une pluralité de forums de discussion ;
l'utilisation dudit filtre sur ledit dispositif client afin d'identifier un ou plusieurs forums de discussion de ladite pluralité de forums de discussion qui correspondent audit profil de téléspectateur ; et
la présentation des seuls forums de discussion identifiés au téléspectateur.

20. Le support selon la Revendication 11, où lesdites instructions sont également exécutables pour :
la collecte d'informations de profil de téléspectateur correspondant à un utilisateur de forum de discussion ;
la génération d'un filtre de contenus s'appuyant sur ledit profil de téléspectateur ; l'acheminement dudit filtre de contenus vers un dispositif client associé à l'utilisateur ; et
l'utilisation dudit filtre sur ledit dispositif client pour empêcher de manière sélective l'affichage de contenus reçus de forum de discussion qui sont considérés comme étant offensants.
